# EUROPÄISCHE PATENTSCHRIFT

(11) **EP 3 607 176 B1**
(45) Veröffentlichungstag und Bekanntmachung des Hinweises auf die Patenterteilung: **12.07.2023**
(21) Anmeldenummer: 18718119.3
(22) Anmeldetag: 06.04.2018
(51) Int. Cl.: F01M 11/03, B01D 35/30, F02M 37/22

(54) **ANSCHLUSSADAPTER ZUM ANSCHLUSS EINER BEHANDLUNGSEINRICHTUNG AN EINEN ANSCHLUSSKOPF EINER BEHANDLUNGSVORRICHTUNG FÜR INSBESONDERE FLÜSSIGE FLUIDE, ANSCHLUSSKOPF UND BEHANDLUNGSVORRICHTUNG**
CONNECTION ADAPTER FOR CONNECTING A TREATMENT DEVICE TO A CONNECTION HEAD OF A TREATMENT DEVICE, IN PARTICULAR FOR LIQUID FLUIDS, CONNECTION HEAD AND TREATMENT DEVICE
ADAPTATEUR DE CONNEXION POUR CONNECTER UN DISPOSITIF DE TRAITEMENT À UNE TÊTE DE CONNEXION D'UN DISPOSITIF DE TRAITEMENT, EN PARTICULIER POUR FLUIDES LIQUIDES, TÊTE DE CONNEXION ET DISPOSITIF DE TRAITEMENT

(30) Priorität: 06.04.2017 DE 102017003368
(43) Veröffentlichungstag der Anmeldung: 12.02.2020
(73) Patentinhaber: MANN+HUMMEL GmbH, 71636 Ludwigsburg (DE)
(72) Erfinder: THALMANN, Christian, 67346 Speyer (DE); OTAGERI, Sangamesh, Davangere 577004 (IN); BANGALORE PANNEERSELVAM, Mohan, Bangalore 560086 (IN)
(74) Vertreter: Mann + Hummel Intellectual Property
(86) Internationale Anmeldenummer: PCT/EP2018/058873
(87) Internationale Veröffentlichungsnummer: WO 2018/185292

(56) Entgegenhaltungen:
- EP-A1- 2 522 412
- EP-A2- 0 658 362
- JP-A- 2003 184 528
- US-A- 4 492 632
- US-A- 5 743 358
- US-A1- 2007 267 339
- US-A1- 2015 298 033

## Beschreibung

### Technisches Gebiet

Die Erfindung betrifft einen Anschlussadapter zum Anschluss einer Behandlungseinrichtung an einen Anschlusskopf einer Behandlungsvorrichtung für insbesondere flüssige Fluide, insbesondere einer Brennkraftmaschine, insbesondere eines Kraftfahrzeugs, wobei der Anschlussadapter einen Verbindungsabschnitt zur Verbindung mit dem Anschlusskopf und einen zu einer gedachten Verbindungsachse koaxialen Schraubstutzenabschnitt aufweist zum Anschrauben der Behandlungseinrichtung, wobei der Schraubstutzenabschnitt wenigstens einen Fluiddurchlasskanal zur Verbindung eines fluidführenden Raumes der Behandlungseinrichtung mit einem fluidführenden Raum des Anschlusskopfs umfasst.

Ferner betrifft die Erfindung eine Vorrichtung umfassend einen solchen Anschlussadapter und einen Anschlusskopf einer Behandlungsvorrichtung für insbesondere flüssige Fluide, insbesondere einer Brennkraftmaschine, insbesondere eines Kraftfahrzeugs, mit wenigstens einem Anschlussadapter zum Anschluss einer Behandlungseinrichtung an den Anschlusskopf, wobei der wenigstens eine Anschlussadapter einen Verbindungsabschnitt zur Verbindung mit dem Anschlusskopf und einen zu einer gedachten Verbindungsachse koaxialen Schraubstutzenabschnitt aufweist zum Anschrauben der Behandlungseinrichtung, wobei der Schraubstutzenabschnitt wenigstens einen Fluiddurchlasskanal zur Verbindung eines fluidführenden Raumes der Behandlungseinrichtung mit einem fluidführenden Raum des Anschlusskopfs umfasst.

Außerdem betrifft die Erfindung eine Behandlungsvorrichtung für insbesondere flüssige Fluide, insbesondere einer Brennkraftmaschine, insbesondere eines Kraftfahrzeugs, mit wenigstens einem Anschlusskopf, mit wenigstens einer Behandlungseinrichtung und mit wenigstens einem Anschlussadapter zum Anschluss der wenigstens einen Behandlungseinrichtung an den wenigstens einen Anschlusskopf, wobei der Anschlussadapter einen Verbindungsabschnitt zur Verbindung mit dem Anschlusskopf und einen zu einer gedachten Verbindungsachse koaxialen Schraubstutzenabschnitt aufweist zum Anschrauben der wenigstens einen Behandlungseinrichtung, wobei der Schraubstutzenabschnitt wenigstens einen Fluiddurchlasskanal zur Verbindung eines fluidführenden Raumes der wenigstens einen Behandlungseinrichtung mit einem fluidführenden Raum des Anschlusskopfs umfasst.

### Stand der Technik

Aus der US 5,743,358 A ist ein Ölfiltermontageadapter bekannt.

Aus der US 5,762,671 A ist ein Adapter bekannt, welcher es einer Person ermöglich unterschiedliche ausgewählte Größen von kostengünstig verfügbaren Öl- oder Luftfiltern als Luftfilter zu verwenden, um eine größere Luftfiltration für Hydrauliksysteme zu erreichen. Der Adapter umfasst ein Gehäuse mit einer axialen zentralen Öffnung, einem vergrößerten zylindrischen zentralen Abschnitt, welcher eine erste und eine zweite gegenüberliegende Oberfläche aufweist, einem ersten Endabschnitt, der sich von der ersten Oberfläche des zentralen Abschnitts erstreckt und der einen vergrößerten externen Gewindeabschnitt aufweist, einem reduzierten zylindrischen Abschnitt, der an der zweiten Oberfläche des vergrößerten zylindrischen Abschnitts des Gehäuses befestigt ist, und einem männlichen Bajonettverbindungsteil, das an dem freien Ende des reduzierten zylindrischen Abschnitts des Gehäuses fixiert ist zur Verbindung mit einem weiblichen Verbindungsteil, das an einen Flüssigkeitsbehälter angeschlossen ist. Der vergrößerte externe Gewindeabschnitt und der kleinere externe Gewindeabschnitt sind angepasst, um wahlweise mit unterschiedlich großen Innengewindeöffnungen in konventionellen Standard-Ölfiltern verbunden zu werden.

Der Erfindung liegt die Aufgabe zugrunde, einen Anschlussadapter, einen Anschlusskopf und eine Behandlungsvorrichtung der eingangs genannten Art zu gestalten, bei denen Behandlungseinrichtungen mit Verbindungsöffnungen mit Innengewinden mit Anschlussköpfen verbunden werden können, welche von Haus aus keine Schraubstutzen zur Verbindung mit den Verbindungsöffnungen aufweisen.

### Offenbarung der Erfindung

Diese Aufgabe wird erfindungsgemäß durch einen Anschlussadapter nach Anspruch 1, eine Vorrichtung nach Anspruch 11 und eine Behandlungsvorrichtung nach Anspruch 12 gelöst.

Erfindungsgemäß verfügt der Anschlussadapter einerseits über den Schraubstutzenabschnitt, mit dem die Behandlungseinrichtung mechanisch und fluidführend verbunden werden kann, und andererseits über den Verbindungsabschnitt mit den Schraubenlöchern, mit dem der Anschlussadapter über eine entsprechende Schraubverbindung mit dem Anschlusskopf verbunden werden kann. Auf diese Weise können Behandlungseinrichtungen mit herkömmlichen Verbindungsöffnungen mit Innengewinden über den Anschlussadapter mit Anschlusskopf verschraubt werden, wobei der Anschlusskopf lediglich über eine Verbindungsmöglichkeit mittels herkömmlicher Schrauben oder Schraubbolzen verfügt. So können andersartige Verbindungseinrichtungen, insbesondere bajonettverschlussartige Verbindungseinrichtungen, zur Verbindung mit entsprechenden Behandlungseinrichtungen, wobei die Verbindungseinrichtungen mittels herkömmlichen Schrauben oder Schraubbolzen mit einem Grundkörper des Anschlusskopfes verbunden sind, gegen den erfindungsgemäßen Anschlussadapter ausgetauscht werden, um Behandlungseinrichtungen mit herkömmlichen Schraubverbindungen verwenden zu können.

Alternativ erfindungsgemäß verfügt der Anschlussadapter einerseits über den Schraubstutzenabschnitt, mit dem die Behandlungseinrichtung mechanisch und fluidführend verbunden werden kann, und andererseits über den Verbindungsabschnitt mit den Schraubenlöchern, mit dem der Anschlussadapter über eine entsprechende Schraubverbindung mit dem Anschlusskopf verbunden werden kann. Auf diese Weise können Behandlungseinrichtungen mit herkömmlichen Verbindungsöffnungen mit Innengewinden über den Anschlussadapter mit dem Anschlusskopf verschraubt werden, wobei der Anschlusskopf lediglich über eine Verbindungsmöglichkeit mittels eines Zentralgewindes verfügt. So können andersartige Verbindungseinrichtungen, insbesondere bajonettverschlussartige Verbindungseinrichtungen, zur Verbindung mit entsprechenden Behandlungseinrichtungen, wobei die Verbindungseinrichtungen mittels herkömmlichen Schrauben oder Schraubbolzen mit einem Grundkörper des Anschlusskopfes verbunden sind, gegen den erfindungsgemäßen Anschlussadapter ausgetauscht werden, um Behandlungseinrichtungen mit herkömmlichen Schraubverbindungen verwenden zu können. Für den Fall, dass am Anschlusskopf keine Gewindebohrungen für Bolzen vorhanden sind, sondern ein Zentralgewinde, kann so der Anschlussadapter mit einem korrespondierenden Gewinde am Zentralgewinde des Anschlusskopfes montiert werden. Der wenigstens eine Verbindungsabschnitt benötigt daher keine Schraubenlöcher für Schrauben oder Gewindebolzen, weist aber ein Zentralgewinde auf, welches koaxial zur zentralen Achse des Anschlussadapters und koaxial zu den am Anschlussadapter angeordneten Dichtungen oder Dichtflächen ist.

Die Behandlungseinrichtung kann trennbar über den Schraubstutzenabschnitt mit dem Anschlussadapter und so mit dem Anschlusskopf verbunden werden. So kann die Behandlungseinrichtung einfach, insbesondere zu Wartungszwecken, entfernt und/oder ausgetauscht werden.

Der Schraubstutzenabschnitt weist wenigstens einen Fluiddurchlasskanal zur Verbindung eines fluidführenden Raumes der Behandlungseinrichtung mit einem fluidführenden Raum des Anschlusskopfes auf. Mit wenigstens einem Fluiddurchlasskanal des Schraubstutzenabschnitts kann ein Fluidauslass für gereinigtes Fluid auf Seiten der Behandlungseinrichtung mit einer Auslassleitung für das gereinigte Fluid auf Seiten des Anschlusskopfes verbunden werden. Alternativ oder zusätzlich kann mit wenigstens einem Fluiddurchlasskanal des Schraubstutzenabschnitts eine Einlassleitung für zu reinigendes Fluid auf Seiten des Anschlusskopfes mit einem Fluideinlass auf Seiten der Behandlungseinrichtung verbunden werden.

Vorteilhafterweise kann die Behandlungsvorrichtung eine Filtervorrichtung zur Filtrierung von Fluid sein. Mit der Filtervorrichtung können Partikel aus dem Fluid entfernt werden.

Erfindungsgemäß weist die Behandlungseinrichtung einen Wechselfilter Fluid auf. Durch Wahl des geeigneten Anschlussadapters können so unterschiedliche Behandlungseinrichtungen wahlweise mit demselben Anschlusskopf verbunden werden. Ein Wechselfilter, welcher auch als Spin-On-Filter bezeichnet werden kann, kann komplett mit seinem Gehäuse und einem darin enthaltenen Filterelement ausgetauscht werden.

Vorteilhafterweise kann die Behandlungsvorrichtung eine Behandlungsvorrichtung für flüssiges Fluid, insbesondere Kraftstoff, Öl, Wasser, Hydraulikflüssigkeit, Harnstoffwasserlösung oder dergleichen, sein. Derartige Flüssigkeiten können als Betriebsstoffe bei Brennkraftmaschinen und/oder Kraftfahrzeugen eingesetzt werden.

Die Behandlungseinrichtung kann vorteilhafterweise ein Motorölfilter einer Brennkraftmaschine eines Kraftfahrzeugs sein. Der Motorölfilter kann vorteilhafterweise Teil eines Motorölkreislaufs einer Brennkraftmaschine sein. Er kann zur Reinigung von Motoröl dienen, welches der Brennkraftmaschine zugeführt wird. Alternativ kann die Behandlungseinrichtung ein Kraftstofffilter einer Brennkraftmaschine eines Kraftfahrzeugs sein. Der Kraftstofffilter kann Teil eines Kraftstoffkreislaufs einer Brennkraftmaschine sein. Er kann zur Reinigung von Kraftstoff, insbesondere Benzin oder Dieselkraftstoff, dienen, welcher der Brennkraftmaschine zur Verbrennung zugeführt wird.

Die Erfindung ist jedoch nicht beschränkt auf einen Motorölfilter oder einen Kraftstofffilter einer Brennkraftmaschine eines Kraftfahrzeugs. Vielmehr kann sie auch bei andersartigen Flüssigkeitssystemen, insbesondere Hydrauliksystemen, Kühlsystemen, Fluidsystemen mit Harnstoffwasserlösung oder dergleichen, von Kraftfahrzeugen oder anderen Maschinen, insbesondere Landmaschinen oder Baumaschinen, verwendet werden. Die Behandlungseinrichtung kann auch außerhalb der Kraftfahrzeugtechnik, insbesondere bei Industriemotoren, eingesetzt werden.

Die Erfindung kann bei Kraftfahrzeugen, insbesondere Personenkraftwagen, Lastkraftwagen, Bussen, landwirtschaftlichen und/oder Bau-Fahrzeugen, Bau-/Landmaschinen, Kompressoren, Industriemotoren oder sonstigen Geräten, insbesondere mit Verbrennungsmotoren, eingesetzt werden.

Bei einer vorteilhaften Ausführungsform können die Schraubenlöcher bezüglich der Verbindungsachse radial außerhalb des Schraubstutzenabschnitts oder einer axialen Projektion des Schraubstutzenabschnitts angeordnet sein. Auf diese Weise können in den Schraubenlöchern angeordnete Schrauben oder Schraubbolzen von außen besser zugänglich gemacht werden. So kann eine Montage oder Demontage des Anschlussadapters vereinfacht werden.

Bei einer weiteren vorteilhaften Ausführungsform kann der Anschlussadapter wenigstens einen Teil wenigstens einer radial außen gelegenen Fluidleitung aufweisen, die sich radial außerhalb des Schraubstutzenabschnitts oder einer axialen Projektion des Schraubstutzenabschnitts befindet und die zur Verbindung eines weiteren fluidführenden Raumes der Behandlungseinrichtung mit einem weiteren fluidführenden Raum des Anschlusskopfs dient. Mit wenigstens einer radial außen gelegenen Fluidleitung kann ein Fluidauslass für gereinigtes Fluid auf Seiten der Behandlungseinrichtung mit einer Auslassleitung für das gereinigte Fluid auf Seiten des Anschlusskopfes verbunden werden. Alternativ oder zusätzlich kann mit wenigstens einer radial außen gelegenen Fluidleitung eine Einlassleitung für zu reinigendes Fluid auf Seiten des Anschlusskopfes mit einem Fluideinlass auf Seiten der Behandlungseinrichtung verbunden werden.

Vorteilhafterweise kann mit wenigstens einer radial außen gelegenen Fluidleitung eine Einlassleitung für zu reinigendes Fluid und mit dem Fluiddurchlasskanal des Schraubstutzenabschnitts eine Auslassleitung für gereinigtes Fluid wenigstens mitgebildet werden oder umgekehrt.

Bei einer weiteren vorteilhaften Ausführungsform kann der Verbindungsabschnitt wenigstens einen zur Verbindungsachse koaxialen Zylinderabschnitt zur Aufnahme eines zur Verbindungsachse koaxialen Anschlussstutzens des Anschlusskopfs aufweisen. Auf diese Weise kann der Anschlussstutzen des Anschlusskopfs wenigstens zu einem Teil durch den Anschlussadapter hindurch zu der Behandlungseinrichtung geführt werden.

Vorteilhafterweise kann der Verbindungsabschnitt zwei zur Verbindungsachse koaxiale Zylinderabschnitte aufweisen. Auf diese Weise können mit den Zylinderabschnitten und dem Anschlussstutzen unterschiedliche Bereiche, insbesondere Fluidräume, begrenzt werden.

Die Zylinderabschnitte können axial zur Verbindungsachse betrachtet hintereinander angeordnet sein. Ein der Behandlungseinrichtung axial zugewandter elementseitiger Zylinderabschnitt kann einen kleineren Durchmesser aufweisen als ein der Behandlungseinrichtung abgewandter kopfseitiger Zylinderabschnitt. Auf diese Weise kann in einem Bereich bezüglich der Verbindungsachse radial zwischen der radial äußeren Umfangsseite des Anschlussstutzens und der radial inneren Umfangsseite des kopfseitigen Zylinderabschnitts ein fluidleitender Ringraum realisiert werden. Die radial innere Umfangsseite des elementseitigen Zylinderabschnitts kann insbesondere dicht an der radial äußeren Umfangsseite des Anschlussstutzens anliegen.

Je nach Durchflussrichtung des Fluids durch die Behandlungsvorrichtung kann der Innenraum des Anschlussstutzens als Fluidableitung für gereinigtes Fluid und der den Anschlussstutzen umgebenden Ringraum als Fluidzuleitung für gereinigtes Fluid dienen oder umgekehrt.

Im Bereich des kopfseitigen Zylinderabschnitts können vorteilhafterweise Durchflussöffnungen für Fluid realisiert sein. Die Durchflussöffnungen können den Ringraum mit einem die Zylinderabschnitte umgebenden äußeren Ringraum des Anschlussadapters verbinden. Der äußere Ringraum des Anschlussadapters kann im montierten Zustand mit wenigstens einem Fluiddurchlass der Behandlungseinrichtung in Verbindung stehen.

Bei einer weiteren vorteilhaften Ausführungsform kann der Anschlussadapter eine Umfangswand aufweisen, welche wenigstens einen fluidleitenden Ringraum des Anschlussadapters bezüglich der Verbindungsachse umfangsmäßig umgibt. Auf diese Weise kann der wenigstens eine Ringraum mit der Umfangswand zur Umgebung hin begrenzt werden.

Erfindungsgemäß weist der Anschlussadapter einen dem anzuschließenden Wechselfilter zugewandten Dichtkragen zur Anlage einer äußeren Ringdichtung des anzuschließenden Wechselfilters auf, wobei der Dichtkragen bevorzugt an einem freien Rand der Umfangswand angeordnet ist. Der Dichtkragen ist radial außerhalb des Verbindungsabschnitts, insbesondere radial außerhalb der wenigstens zwei Schraubenlöcher oder des Zentralgewindes angeordnet. So kann die gesamte Schnittstelle raumsparend derart ausgestaltet werden, dass die radiale Erstreckung den Umfang der äußeren Ringdichtung des anzuschließenden Wechselfilters nicht überragt.

Bei einer weiteren vorteilhaften Ausführungsform kann wenigstens ein Schraubenloch bezüglich der Verbindungsachse radial innerhalb der Umfangswand oder einer axialen Projektion der Umfangswand angeordnet sein und/oder wenigstens ein Schraubenloch kann bezüglich der Verbindungsachse radial außerhalb der Umfangswand oder einer axialen Projektion der Umfangswand angeordnet sein.

Vorteilhafterweise kann wenigstens ein Schraubenloch bezüglich der Verbindungsachse radial innerhalb der Umfangswand oder einer axialen Projektion der Umfangswand angeordnet sein. Auf diese Weise kann ein mit der Umfangswand begrenzter Ringraum entsprechend groß ausgestaltet werden.

Alternativ oder zusätzlich kann wenigstens ein Schraubenloch bezüglich der Verbindungsachse radial außerhalb der Umfangswand oder einer axialen Projektion der Umfangswand angeordnet sein. Auf diese Weise können die entsprechende Schraube oder der Gewindebolzen von außen besser zugänglich angeordnet werden. Außerdem müssen die Schraubenlöcher so nicht abgedichtet werden.

Bei einer weiteren vorteilhaften Ausführungsform kann der Anschlussadapter wenigstens einen Teil einer Element-Dichteinrichtung zum Abdichten einer Verbindung zu der Behandlungseinrichtung und/oder wenigstens einen Teil einer Kopf-Dichteinrichtung zum Abdichten einer Verbindung zu dem Anschlusskopf aufweisen.

Vorteilhafterweise kann der Anschlussadapter wenigstens einen Teil einer Element-Dichteinrichtung zum Abdichten einer Verbindung zu der Behandlungseinrichtung aufweisen. Auf diese Weise kann wenigstens ein fluidführender Raum zwischen dem Anschlussadapter und der Behandlungseinrichtung insbesondere zur Umgebung hin abgedichtet werden.

Alternativ oder zusätzlich kann vorteilhafterweise der Anschlussadapter wenigstens einen Teil einer Kopf-Dichteinrichtung zum Abdichten einer Verbindung zu dem Anschlusskopf aufweisen. Auf diese Weise kann wenigstens ein fluidführender Raum zwischen dem Anschlussadapter und dem Anschlusskopf gegenüber einem anderen fluidführenden Raum und/oder gegenüber der Umgebung abgedichtet werden.

Vorteilhafterweise kann ein freier Rand einer Umfangswand eine entsprechende Dichtfläche, insbesondere eine zur Verbindungsachse koaxiale Ringfläche, zur Anlage einer Dichtung, insbesondere einer zur Verbindungsachse koaxialen Ringdichtung, auf Seiten der Behandlungseinrichtung aufweisen. Auf diese Weise kann die Verbindung zwischen dem Anschlussadapter und der Behandlungseinrichtung automatisch beim Anschrauben der Behandlungseinrichtung mittels der entsprechenden Dichtung abgedichtet werden.

Vorteilhafterweise kann der Anschlussadapter wenigstens eine Dichtung, insbesondere eine zur Verbindungsachse koaxiale Ringdichtung, zum Abdichten eines fluidführenden Raums zur Umgebung hin aufweisen. Alternativ oder zusätzlich kann der Anschlussadapter wenigstens eine Dichtung, insbesondere eine zur Verbindungsachse koaxiale Ringdichtung, zum Abdichten eines fluidführenden Raums zwischen dem Anschlussadapter und dem Anschlusskopf gegenüber einem anderen fluidführenden Raum zwischen dem Anschlussadapter und der Behandlungseinrichtung aufweisen.

Bei einer weiteren vorteilhaften Ausführungsform kann wenigstens an einem Schraubenloch wenigstens ein Teil einer Schraubenloch-Dichteinrichtung angeordnet sein. Auf diese Weise kann das Schraubenloch und eine entsprechende Schraube oder ein Bolzen gegenüber einem fluidführenden Raum und/oder der Umgebung abgedichtet werden.

Vorteilhafterweise kann das wenigstens eine Schraubenloch von einer Dichtfläche für eine insbesondere ringförmige Dichtung, insbesondere eine O-Ringdichtung, umgeben sein. Die Dichtung kann zwischen einem Schraubenkopf oder einer Mutter einerseits und der Dichtfläche andererseits dichtend eingepresst werden.

Bei einer weiteren vorteilhaften Ausführungsform kann der Anschlussadapter mit dem Verbindungsabschnitt und dem Schraubstutzenabschnitt einteilig ausgestaltet sein. Auf diese Weise kann er in einem Stück gefertigt, montiert und demontiert werden.

Ferner wird die technische Aufgabe erfindungsgemäß bei dem Anschlusskopf dadurch gelöst, dass der wenigstens eine Verbindungsabschnitt wenigstens zwei Schraubenlöcher für Schrauben oder Gewindebolzen aufweist.

Außerdem wird die technische Aufgabe bei der Behandlungsvorrichtung dadurch gelöst, dass der wenigstens eine Verbindungsabschnitt wenigstens zwei Schraubenlöcher für Schrauben oder Gewindebolzen aufweist.

Im Übrigen gelten die im Zusammenhang mit dem erfindungsgemäßen Anschlussadapter, dem erfindungsgemäßen Anschlusskopf und der erfindungsgemäßen Behandlungsvorrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Detailansicht eines Längsschnitts einer Filtervorrichtung für Motoröl einer Brennkraftmaschine, mit einem Anschlusskopf, einem Wechselfilter und einem Anschlussadapter gemäß einem ersten Ausführungsbeispiel zur lösbaren Verbindung des Wechselfilters mit dem Anschlusskopf;
- Figur 2: eine isometrische Darstellung des Anschlussadapters aus der Figur 1 aus einer ersten Perspektive;
- Figur 3: eine isometrische Darstellung des Anschlussadapters aus der Figur 1 aus einer zweiten Perspektive;
- Figur 4: den Anschlussadapter aus den Figuren 1 bis 3 in einem Längsschnitt parallel zu einer Verbindungsachse;
- Figur 5: den Anschlussadapter aus der ersten Perspektive aus der Figur 2 mit eingesetzten Befestigungsschrauben;
- Figur 6: den Anschlussadapter aus der zweiten Perspektive aus der Figur 3 mit eingesetzten Befestigungsschrauben;
- Figur 7: den Anschlussadapter in dem Längsschnitt aus der Figur 4 mit eingesetzten Befestigungsschrauben;
- Figur 8: einen Längsschnitt durch die gesamte Filtervorrichtung aus der Figur 1;
- Figur 9: eine isometrische Darstellung der gesamten Filtervorrichtung aus der Figur 1;
- Figur 10: eine Detailansicht eines Längsschnitts einer Filtervorrichtung für Motoröl einer Brennkraftmaschine, mit einem Anschlusskopf, einem Wechselfilter und einem Anschlussadapter gemäß einem zweiten Ausführungsbeispiel;
- Figur 11: eine isometrische Darstellung des Anschlussadapters aus der Figur 10 aus einer ersten Perspektive;
- Figur 12: eine isometrische Darstellung des Anschlussadapters aus der Figur 10 aus einer zweiten Perspektive;
- Figur 13: den Anschlussadapter aus der Figur 10 in einem Längsschnitt parallel zu einer Verbindungsachse;
- Figur 14: den Anschlussadapter aus der ersten Perspektive aus der Figur 11 mit eingesetzten Befestigungsschrauben;
- Figur 15: den Anschlussadapter aus der zweiten Perspektive aus der Figur 12 mit eingesetzten Befestigungsschrauben;
- Figur 16: den Anschlussadapter in dem Längsschnitt aus der Figur 13 mit eingesetzten Befestigungsschrauben;
- Figur 17: einen Längsschnitt durch die gesamte Filtervorrichtung aus der Figur 10;
- Figur 18: eine isometrische Darstellung der gesamten Filtervorrichtung aus der Figur 10;
- Figur 19: eine Detailansicht eines Längsschnitts einer Filtervorrichtung für Motoröl einer Brennkraftmaschine, mit einem Anschlusskopf, einem Wechselfilter und einem Anschlussadapter gemäß einem dritten Ausführungsbeispiel;
- Figur 20: eine isometrische Darstellung des Anschlussadapters aus der Figur 19 aus einer ersten Perspektive;
- Figur 21: eine isometrische Darstellung des Anschlussadapters aus der Figur 19 aus einer zweiten Perspektive;
- Figur 22: den Anschlussadapter aus der Figur 19 in einem Längsschnitt parallel zu einer Verbindungsachse;
- Figur 23: den Anschlussadapter aus der ersten Perspektive aus der Figur 20 mit eingesetzten Befestigungsschrauben;
- Figur 24: den Anschlussadapter aus der zweiten Perspektive aus der Figur 21 mit eingesetzten Befestigungsschrauben;
- Figur 25: den Anschlussadapter in dem Längsschnitt aus der Figur 22 mit eingesetzten Befestigungsschrauben;
- Figur 26: einen Längsschnitt durch die gesamte Filtervorrichtung aus der Figur 19;
- Figur 27: eine isometrische Darstellung der gesamten Filtervorrichtung aus der Figur 19;
- Figur 28: eine Detailansicht eines Längsschnitts einer alternativen, sich gegenüber der Ausführungsform der Figur 1 durch die Befestigungsweise unterscheidende Filtervorrichtung, mit einem Anschlusskopf, einem Wechselfilter und einem Anschlussadapter gemäß einem vierten Ausführungsbeispiel zur lösbaren Verbindung des Wechselfilters mit dem Anschlusskopf.

In den Figuren sind gleiche Bauteile mit gleichen Bezugszeichen versehen.

### Ausführungsform(en) der Erfindung

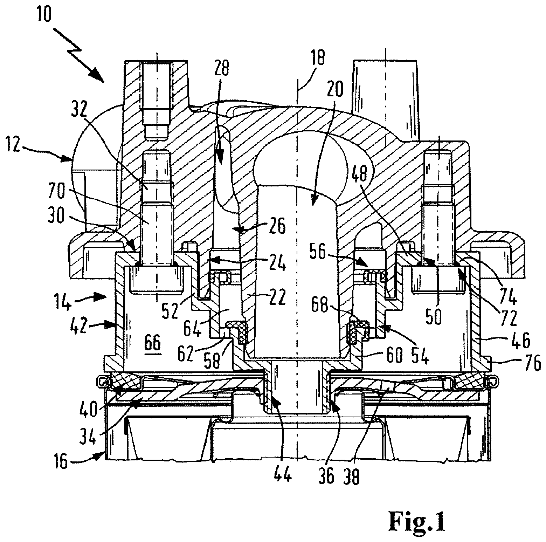

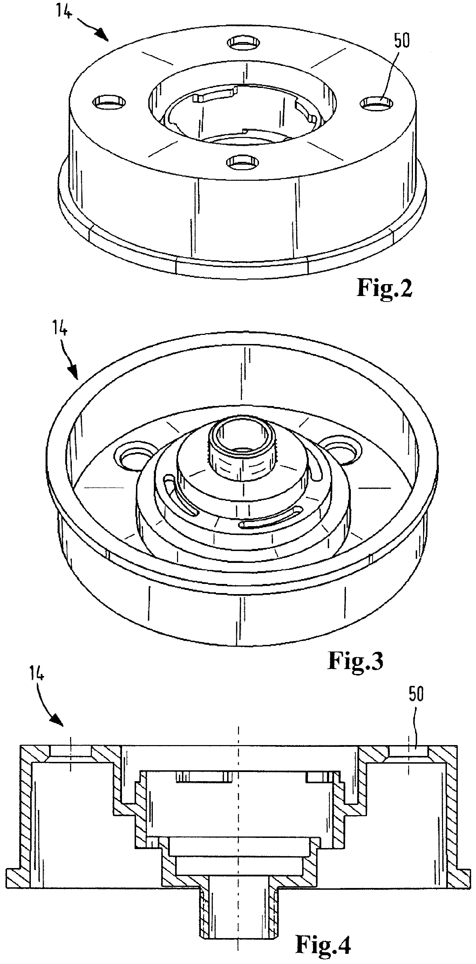

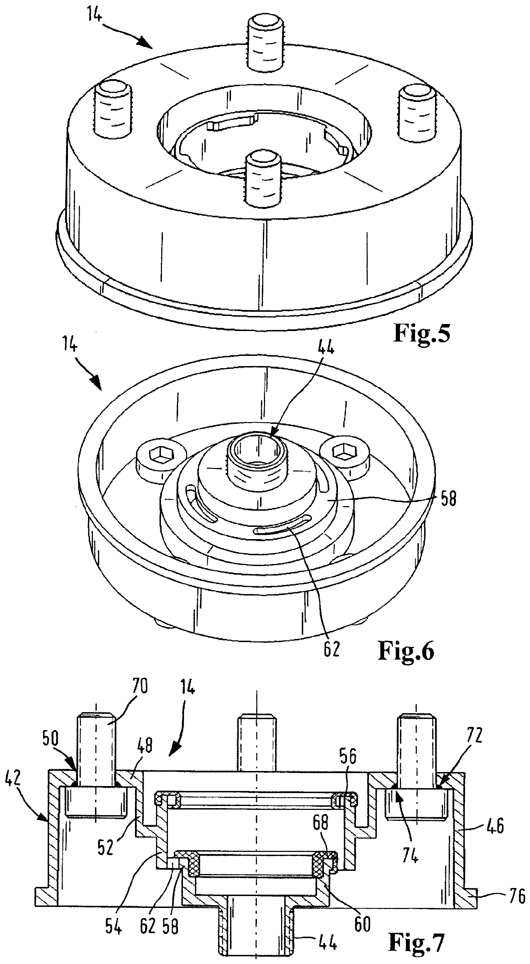

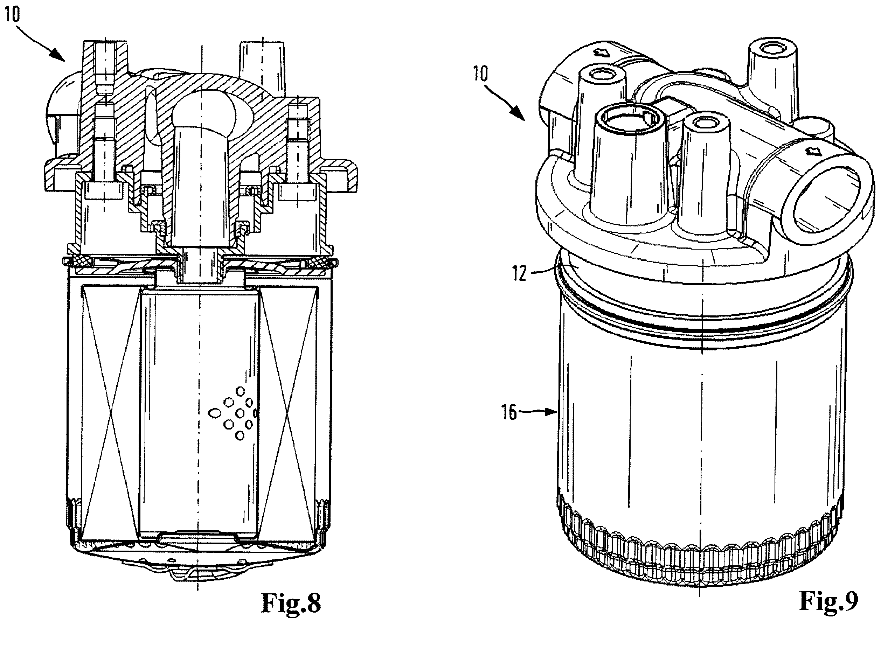

In den Figuren 1 bis 9 ist eine Filtervorrichtung 10 in unterschiedlichen Perspektiven, Schnitten und Detailansichten gezeigt. Bei der Filtervorrichtung 10 kann es sich beispielsweise um eine Ölfiltervorrichtung zur Reinigung von Motoröl einer Brennkraftmaschine eines Kraftfahrzeugs handeln. Die Filtervorrichtung 10 kann dabei beispielhaft in einem Motorölkreislauf der Brennkraftmaschine angeordnet sein.

Die Filtervorrichtung 10 umfasst einen Anschlusskopf 12 in der Figur 1 oben, an den unten über einen Anschlussadapter 14 gemäß einem ersten Ausführungsbeispiel ein Behandlungselement in Form eines Wechselfilters 16 trennbar angeschraubt ist. Die Filtervorrichtung 10 weist eine gedachte Verbindungsachse 18 auf, bezüglich der eine lösbare Schraubverbindung zwischen dem Wechselfilter 16 und dem Anschlussadapter 14 realisiert wird.

Wenn im Folgenden von "radial", "axial", " koaxial", "umfangsmäßig", "exzentrisch" oder dergleichen die Rede ist, so bezieht sich dies, sofern nicht anders erwähnt, auf die Verbindungsachse 18.

Der Anschlusskopf 12 kann fest mit einem Bauteil der Brennkraftmaschine, beispielsweise einem Motorblock oder einem Rahmen der Brennkraftmaschine, verbunden sein. Der Anschlusskopf 12 umfasst eine Auslassleitung 20 für gereinigtes Öl, welche in einen koaxialen Anschlussstutzen 22 auf der dem Wechselfilter 16 zugewandten Anschlussseite des Anschlusskopfs 12 mündet.

Die radial äußere Umfangsseite des Anschlussstutzens 22 verläuft konisch und verjüngt sich zu dem freien Ende des Anschlussstutzens 22 hin, welches dem Anschlussadapter 14 zugewandt ist.

Der Anschlussstutzen 22 ist im Bereich seines dem Wechselfilter 16 axial abgewandten Endes von einer koaxialen Ringwand 24 umgeben. Radial zwischen der Ringwand 24 und dem Anschlussstutzen 22 ist ein Einlassringraum 26 realisiert, in den eine Einlassleitung 28 des Anschlusskopfs 12 für zu reinigendes Motoröl mündet.

Radial außen ist die Ringwand 24 von einer ringförmigen koaxialen Anschlussfläche 30 umgeben, die dem Anschlussadapter 14 zugewandt ist. In der Anschlussfläche 30 sind umfangsmäßig gleichmäßig verteilt insgesamt 4 Gewindebohrungen 32 angeordnet, deren Achsen parallel zur Verbindungsachse 18 verlaufen.

Bei dem Wechselfilter 16 handelt es sich um einen an sich bekannten Spin-On-Filter. Der Wechselfilter 16 umfasst ein Filtergehäuse, in dem ein Filterelement zur Reinigung des Motoröls angeordnet ist. Ein Gehäusedeckel 34 verschließt das Filtergehäuse und befindet sich auf der dem Anschlusskopf 12 axial zugewandten Seite.

Der Gehäusedeckel 34 verfügt über eine koaxiale Verbindungsöffnung 36 mit einem Innengewinde, welche auch als Auslass für gereinigtes Motoröl dient. Die Verbindungsöffnung 36 ist mit einem reinölseitigen Bereich des Innenraums des Filtergehäuses verbunden.

Die Verbindungsöffnung 36 ist von einer Mehrzahl von exzentrisch angeordneten Einlassöffnungen 38 für zu reinigendes Motoröl umgeben, welche in einen rohölseitigen Bereich des Innenraums des Filtergehäuses führen.

Im Bereich seines radial äußeren Randes ist an dem Gehäusedeckel 34 eine koaxiale, umfangsmäßig zusammenhängende Ringdichtung 40 angeordnet. Die Ringdichtung 40 dichtet in axialer Richtung gegen den Anschlussadapter 14 ab.

Der Anschlussadapter 14 ist axial zwischen dem Anschlusskopf 12 und dem Wechselfilter 16 angeordnet. Der Anschlussadapter 14 ist insgesamt einteilig ausgebildet. Der Anschlussadapter 14 hat außen eine etwa becherartige Form. Er verfügt über einen Verbindungsabschnitt 42 zur Verbindung mit dem Anschlusskopf 12 und einen koaxialen Schraubstutzenabschnitt 44 mit einem Außengewinde zum Aufschrauben des Innengewindes der Verbindungsöffnung 36 des Wechselfilters 16.

Der Anschlussadapter 14 weist eine koaxiale, umfangsmäßig zusammenhängende Umfangswand 46 auf, an die sich auf der dem Anschlusskopf 12 axial zugewandten Bodenseite des becherförmigen Anschlussadapters 14 ein sich umfangsmäßig erstreckender ringförmiger koaxialer Befestigungsabschnitt 48 anschließt. In dem Befestigungsabschnitt 48 sind umfangsmäßig gleichmäßig verteilt beispielhaft vier Schraubenlöcher 50 angeordnet, welche jeweils den Gewindebohrungen 32 des Anschlusskopfs 12 zugeordnet sind. Die Schraubenlöcher 50 sind in radialer Richtung betrachtet jeweils etwa mittig in dem Befestigungsabschnitt 48 angeordnet.

An einen radial inneren Rand des Befestigungsabschnitts 48 schließt sich ein erster Zylinderabschnitt 52 in Form eines Hohlzylinders an, welcher sich von dem Befestigungsabschnitt 48 weg koaxial ins Innere des becherförmigen Anschlussadapters 14 erstreckt. Der erste Zylinderabschnitt 52 geht einstückig in einen zweiten koaxialen, kopfseitigen Zylinderabschnitt 54 über, welcher ebenfalls die Form eines Hohlzylinders hat. Der Durchmesser des kopfseitigen Zylinderabschnitts 54 ist kleiner als der des ersten Zylinderabschnitts 52. Der kopfseitige Zylinderabschnitt 54 überlappt den ersten Zylinderabschnitt 52 auf der dem Anschlusskopf 12 axial zugewandten Seite. In einer dadurch gebildeten Nut zwischen der radial inneren Umfangsseite des ersten Zylinderabschnitts 52 und der radial äußeren Umfangsseite des kopfseitigen Zylinderabschnitts 54 ist in montiertem Zustand ein Ende der Ringwand 24 des Anschlusskopfs 12 eingesteckt.

An dem Stirnrand des kopfseitigen Zylinderabschnitts 54, der dem Anschlusskopf 12 zugewandt ist, ist eine rohölseitige koaxiale Ringdichtung 56 angeordnet, welche den kopfseitigen Zylinderabschnitt 54 gegen den ersten Zylinderabschnitt 52 rohölseitig auf Seiten des Einlassringraums 26 abdichtet und Teil einer Kopf-Dichteinrichtung ist.

An seinem axial gegenüberliegenden Rand, der dem Wechselfilter 16 zugewandt ist, geht der kopfseitige Zylinderabschnitt 54 über einen sich nach radial innen erstreckenden Kragen 58 in einen dritten koaxialen, elementseitigen Zylinderabschnitt 60 ebenfalls in Form eines Hohlzylinders über. Der Durchmesser des elementseitigen Zylinderabschnitts 60 ist kleiner als der Durchmesser des kopfseitigen Zylinderabschnitts 54.

In dem Kragen 58 sind umfangsmäßig verteilt mehrere Öldurchlasslöcher 62 angeordnet. Mit den Öldurchlasslöchern 62 wird ein ölführender Ringraum 64 mit einem Öleinlassraum 66 verbunden. Der Ringraum 64 ist radial zwischen der radial inneren Umfangsseite des kopfseitigen Zylinderabschnitts 54 und einer radial äußeren Umfangsseite des Anschlussstutzens 22 angeordnet. Der Öleinlassraum 66 ist von dem Befestigungsabschnitt 48, den Zylinderabschnitten 52, 54 und 60, der Umfangswand 46 und in montiertem Zustand von dem Gehäusedeckel 34 des Wechselfilters 16 begrenzt.

Auf der den Öldurchlasslöchern 62 axial gegenüberliegenden Seite bildet eine Lücke zwischen der radial äußeren Umfangswand des Anschlussstutzens 22 und der rohölseitigen Ringdichtung 56 eine Ölverbindung zwischen dem Einlassringraum 26 des Anschlusskopfes 12 und dem Ringraum 64 im Bereich des Anschlussadapters 14.

Der Ringraum 64, die Öldurchlasslöcher 62 und der Öleinlassraum 66 bilden eine bezüglich dem Schraubstutzenabschnitt 44 radial außen gelegene Ölleitung für zu reinigendes Motoröl zur Verbindung des Einlassringraums 26 auf Seiten des Anschlusskopfs 12 mit den Einlassöffnungen 38 aufseiten des Wechselfilters 16.

An dem Rand des elementseitigen Zylinderabschnitts 60, der dem Anschlusskopf 12 axial zugewandt ist, ist eine koaxiale umfangsmäßig zusammenhängende reinölseitige Ringdichtung 68 angeordnet. Die reinölseitige Ringdichtung 68 dichtet die radial äußere Umfangsseite des Anschlussstutzens 22 gegen den elementseitigen Zylinderabschnitt 60 ab und trennt den rohölseitigen Ringraum 64 von den reinölseitigen Innenräumen des Schraubstutzenabschnitts 44 und des Anschlussstutzens 22. Die Ringdichtung 68 ist Teil einer Element-Dichteinrichtung.

Auf der Seite, die der reinölseitigen Ringdichtung 68 axial abgewandt ist, geht der elementseitige Zylinderabschnitt 60 über eine sich nach radial innen erstreckende Stufe in den querschnittsverjüngten Schraubstutzenabschnitt 44 über.

Bei montiertem Wechselfilter 16 liegt die freie Stirnseite des Anschlussstutzens 22 an der Stufe am Übergang zwischen dem elementseitigen Zylinderabschnitt 60 und dem Schraubstutzenabschnitt 44 an. Der Innenraum des Schraubstutzenabschnitts 44 bildet einen Öldurchlasskanal zur Verbindung des reinölseitigen Innenraums des Wechselfilters 16 mit der Auslassleitung 20.

Zur Fixierung des Anschlussadapters 14 sind beispielhaft vier Befestigungsschrauben 70 vorgesehen, welche von der dem Wechselfilter 16 zugewandten Seite durch die Schraubenlöcher 50 führen und in den Gewindebohrungen 32 verschraubt sind.

Zwischen den Köpfen der Befestigungsschrauben 70 und dem Befestigungsabschnitt 48 ist jeweils eine Ringdichtung, beispielhaft in Form von O-Ringdichtungen 72, angeordnet. Die O-Ringdichtungen 72 liegen jeweils dichtend an entsprechenden ringförmigen, die jeweiligen Schraubenlöcher 50 jeweils umgebenden Dichtflächen 74 an. Die O-Ringdichtungen 72 dichten den rohölseitigen Öleinlassraum 66 im Bereich der Befestigungsschrauben 70 gegen die Umgebung ab. Jeweils eine O-Ringdichtung 72 bildet mit der entsprechenden Dichtfläche 74 eine Schraubenloch-Dichteinrichtung.

Der dem Wechselfilter 16 zugewandte freie Rand der Umfangswand 46 weist einen Dichtkragen 76 auf, der sich bevorzugt nach radial außen erstreckt, um eine gegenüber der Dicke der Umfangswand 46 breitere Dichtfläche zur Verfügung zu stellen. Der Dichtkragen 76 liegt dichtend an der Ringdichtung 40 des Wechselfilters 16 an.

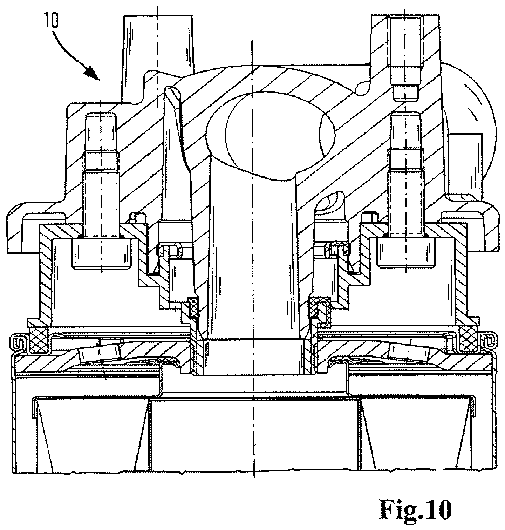

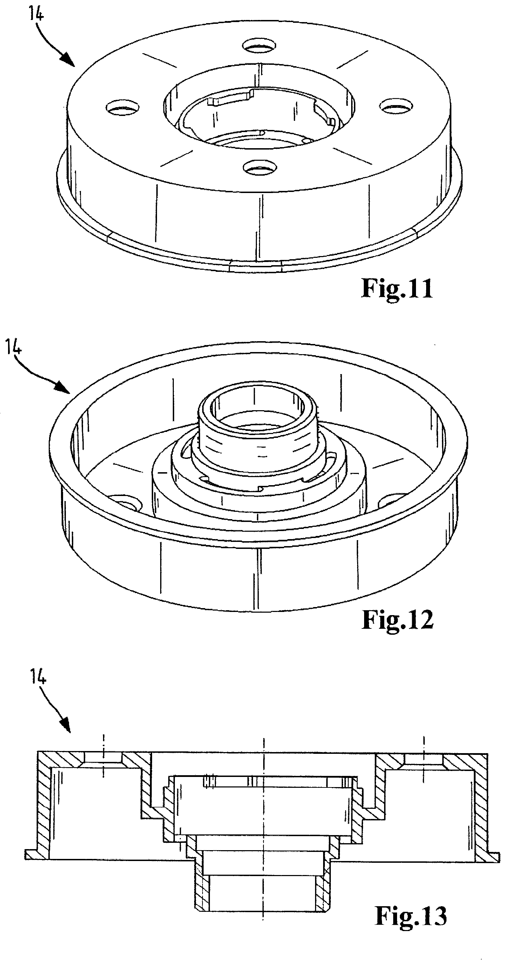

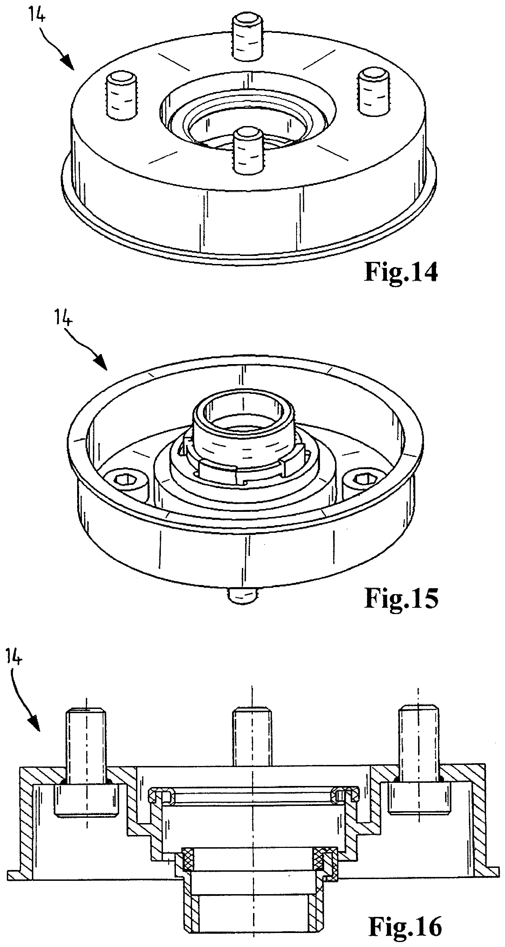

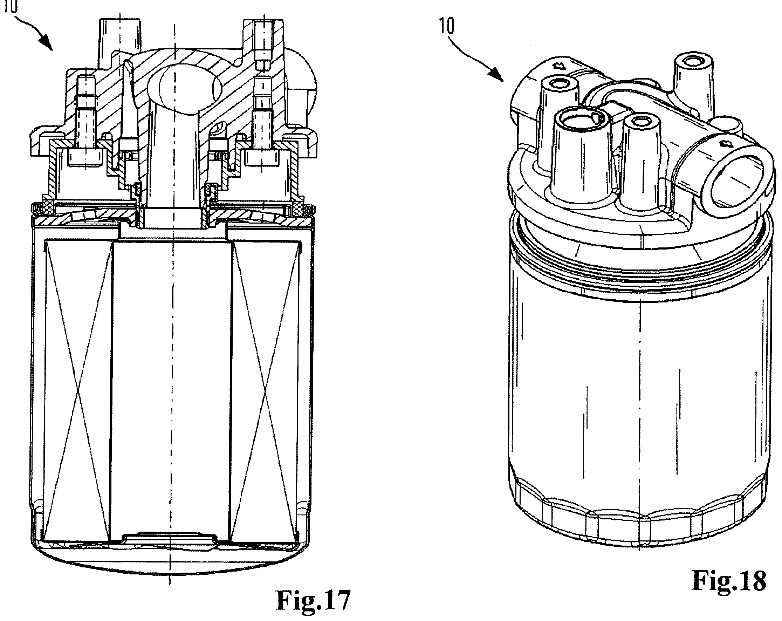

In den Figuren 10 bis 18 ist eine Filtervorrichtung 10 mit einem Anschlussadapter 14 gemäß einem zweiten Ausführungsbeispiel gezeigt. Diejenigen Elemente, die zu denen des ersten Ausführungsbeispiels aus den Figuren 1 bis 9 ähnlich sind, sind mit denselben Bezugszeichen versehen. Das zweite Ausführungsbeispiel unterscheidet sich von dem ersten Ausführungsbeispiel dadurch, dass die Schraubenlöcher 50 statt mittig in dem Befestigungsabschnitt 48 angeordnet zu dem ersten Zylinderabschnitt 52 nach radial innen versetzt sind.

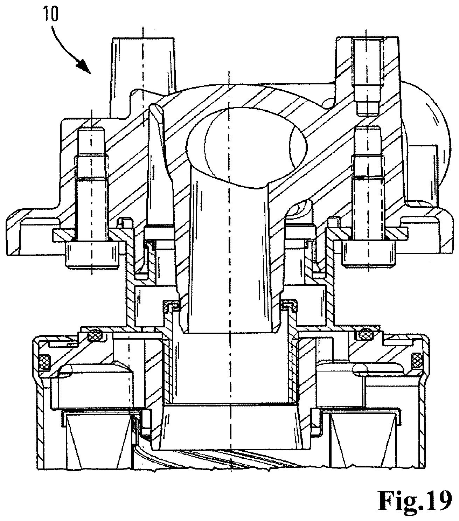

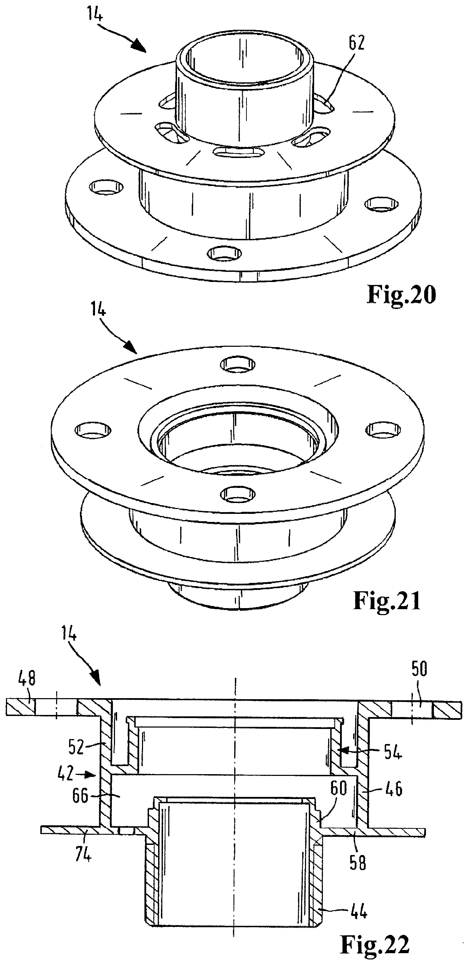

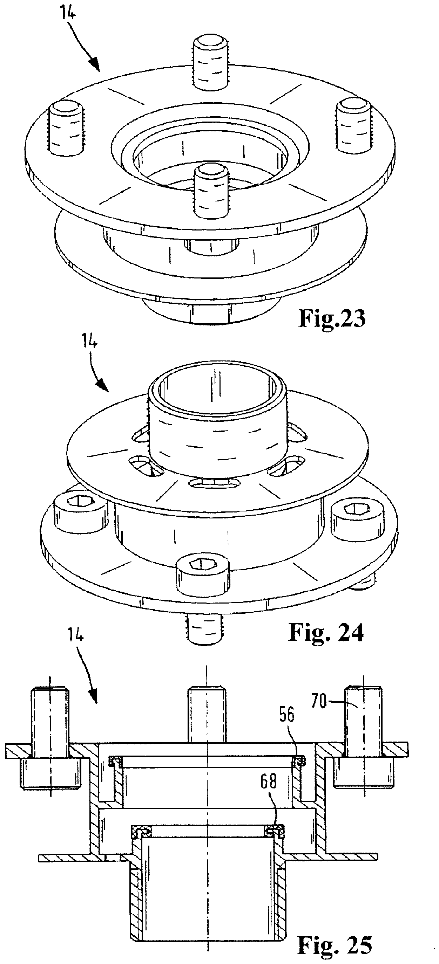

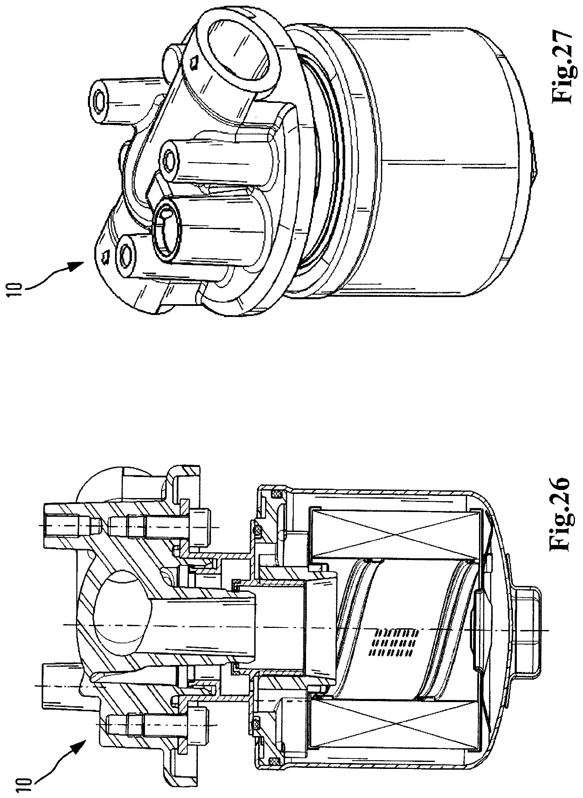

In den Figuren 19 bis 27 ist eine Filtervorrichtung 10 mit einem Anschlussadapter 14 gemäß einem dritten Ausführungsbeispiel gezeigt. Diejenigen Elemente, die zu denen des ersten Ausführungsbeispiels aus den Figuren 1 bis 10 ähnlich sind, sind mit denselben Bezugszeichen versehen. Das dritte Ausführungsbeispiel unterscheidet sich von dem ersten Ausführungsbeispiel dadurch, dass die Umfangswand 46 nach radial innen versetzt ist, so dass sich die Schraubenlöcher 50 radial außerhalb der Umfangswand 46 befinden. Außerdem geht die Umfangswand 46 direkt in den ersten Zylinderabschnitt 52 über. Die Umfangswand 46 ist mit ihrem dem Wechselfilter 16 axial zugewandten Rand über eine ringscheibenförmige Verbindung, welche die Öldurchlasslöcher 62 und die Dichtfläche 74 aufweist, mit dem elementseitigen Zylinderabschnitt 60 verbunden. Der elementseitige Zylinderabschnitt 60 geht seinerseits mit gleichem Durchmesser direkt in den Anschlussstutzen 22 über.

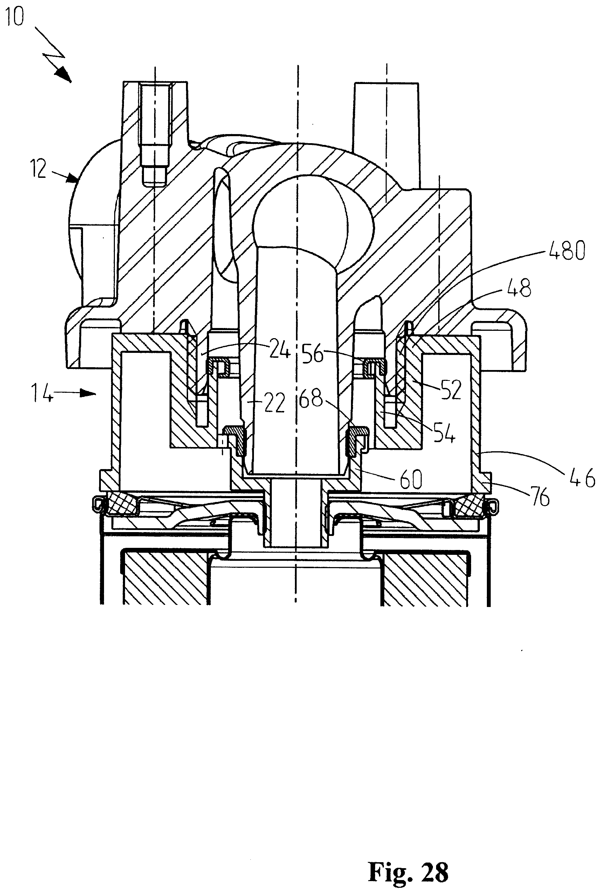

In der Figur 28 ist eine Filtervorrichtung 10 mit einem Anschlussadapter 14 gemäß einem vierten Ausführungsbeispiel gezeigt, welches sich gegenüber der Ausführungsform der Figuren 1 bis 9 durch die Befestigungsweise des Anschlussadapters 14 am Anschlusskopf 12 unterscheidet. Hierzu ist statt der Schrauben 70 ein Zentralgewinde 480 zwischen Anschlusskopf 12 und Anschlussadapter 14 vorgesehen. Dies hat den Vorteil, dass keine Schraubenlöcher 50 (siehe Fig. 1) vorgesehen sein müssen. Das Zentralgewinde 480 ist bevorzugt wie gezeigt radial außerhalb der Dichtungen, insbesondere außerhalb der Kopf-Dichteinrichtung 56 und der reinölseitigen Ringdichtung 68, und damit außerhalb des von Fluiden durchströmten oder berührten Bereichs angeordnet. Bevorzugt weist, wie in Figur 28 gezeigt, der erste Zylinderabschnitt 52 ein Innengewinde und die Ringwand 24 ein Außengewinde auf zur Bildung des Zentralgewindes 480. Somit weist der alternative Anschlussadapter 14 eine koaxiale, umfangsmäßig zusammenhängende Umfangswand 46, abweichend von der Ausführungsform der Figur 1 eine geschlossene, dem Anschlusskopf 12 axial zugewandte Bodenseite des becherförmigen Anschlussadapters 14 sowie einen an die Bodenseite anschließenden Befestigungsabschnitt 48, der durch das Zentralgewinde 480 gebildet ist, auf. Das Zentralgewinde 480 ist koaxial zu den Dichtungen 68, 56. Das Zentralgewinde 480 ist bevorzugt axial relativ zu den Dichtungen 68, 56 so angeordnet, dass diese erst in dichtende Position gelangen, wenn ein Teil des Gewindewegs des Innengewindes bei dessen Montage überwunden ist. So kann eine gute Zentrierung und die Gefahr des Verkantens oder von Beschädigungen der Dichtungen 68, 56 bei der Montage verhindert werden. Es sei verstanden, dass eine analoge Modifikation auch für die in den Figuren 10 - 18 und 19 - 27 gezeigten Ausführungsformen möglich und erfindungsgemäß ist, wobei jeweils der erste Zylinderabschnitt 52 ein Innengewinde als Zentralgewinde 480 aufweist. In allen Varianten ist das Zentralgewinde bevorzugt radial gesehen außerhalb der Dichtungen 56, 68 angeordnet, anders ausgedrückt weist das Zentralgewinde 480 bevorzugt einen größeren Durchmesser auf als die Dichtungen 56, 68 und/oder deren Dichtflächen.

## Patentansprüche

1. Anschlussadapter (14) zum Anschluss einer Behandlungseinrichtung (16) an einen Anschlusskopf (12) einer Behandlungsvorrichtung (10) für insbesondere flüssige Fluide, insbesondere einer Brennkraftmaschine, insbesondere eines Kraftfahrzeugs, wobei der Anschlussadapter (14) einen Verbindungsabschnitt (42) zur Verbindung mit dem Anschlusskopf (12) und einen zu einer gedachten Verbindungsachse (18) koaxialen Schraubstutzenabschnitt (44) aufweist zum Anschrauben der Behandlungseinrichtung (16), wobei der Schraubstutzenabschnitt (44) wenigstens einen Fluiddurchlasskanal zur Verbindung eines fluidführenden Raumes der Behandlungseinrichtung (16) mit einem fluidführenden Raum (20) des Anschlusskopfs (12) umfasst, wobei der wenigstens eine Verbindungsabschnitt (42) wenigstens zwei Schraubenlöcher (50) für Schrauben (70) oder Gewindebolzen oder ein Zentralgewinde (480) zur Verbindung mit einem anschlusskopfseitigen Zentralgewinde aufweist, **dadurch gekennzeichnet, dass** die Behandlungseinrichtung einen Wechselfilter (16) aufweist und der Anschlussadapter (14) einen dem anzuschließenden Wechselfilter (16) zugewandten Dichtkragen (76) zur Anlage einer äußeren Ringdichtung (40) des anzuschließenden Wechselfilters (16) aufweist, der bevorzugt an einem freien Rand der Umfangswand (46) angeordnet ist, wobei der Dichtkragen (76) radial außerhalb des Verbindungsabschnitts (42) angeordnet ist.

2. Anschlussadapter nach Anspruch 1, **dadurch gekennzeichnet, dass** die Schraubenlöcher (50) bezüglich der Verbindungsachse (18) radial außerhalb des Schraubstutzenabschnitts (44) oder einer axialen Projektion des Schraubstutzenabschnitts (44) angeordnet sind.

3. Anschlussadapter nach Anspruch 1 oder 2, **dadurch gekennzeichnet, dass** der Anschlussadapter (14) wenigstens einen Teil (64, 66) wenigstens einer radial außen gelegenen Fluidleitung aufweist, die sich radial außerhalb des Schraubstutzenabschnitts (44) oder einer axialen Projektion des Schraubstutzenabschnitts (44) befindet und die zur Verbindung eines weiteren fluidführenden Raumes der Behandlungseinrichtung (16) mit einem weiteren fluidführenden Raum (26) des Anschlusskopfs (12) dient.

4. Anschlussadapter nach einem der vorigen Ansprüche, **dadurch gekennzeichnet, dass** der Verbindungsabschnitt (42) wenigstens einen zur Verbindungsachse (18) koaxialen Zylinderabschnitt (54, 60) zur Aufnahme eines zur Verbindungsachse (18) koaxialen Anschlussstutzens (22) des Anschlusskopfs (12) aufweist.

5. Anschlussadapter nach einem der vorigen Ansprüche, **dadurch gekennzeichnet, dass** der Anschlussadapter (14) eine Umfangswand (46) aufweist, welche wenigstens einen fluidleitenden Ringraum (66) des Anschlussadapters (14) bezüglich der Verbindungsachse (18) umfangsmäßig umgibt.

6. Anschlussadapter nach einem der vorigen Ansprüche, **dadurch gekennzeichnet, dass** der Dichtkragen (76) radial außerhalb der wenigstens zwei Schraubenlöcher (50) oder des Zentralgewindes (480) angeordnet ist.

7. Anschlussadapter nach Anspruch 5 oder 6, **dadurch gekennzeichnet, dass** wenigstens ein Schraubenloch (50) bezüglich der Verbindungsachse (18) radial innerhalb der Umfangswand (46) oder einer axialen Projektion der Umfangswand (46) angeordnet ist und/oder wenigstens ein Schraubenloch (50) bezüglich der Verbindungsachse (18) radial außerhalb der Umfangswand (46) oder einer axialen Projektion der Umfangswand (46) angeordnet ist.

8. Anschlussadapter nach einem der vorigen Ansprüche, **dadurch gekennzeichnet, dass** der Anschlussadapter (14) wenigstens einen Teil einer Element-Dichteinrichtung (68) zum Abdichten einer Verbindung zu der Behandlungseinrichtung (16) und/oder wenigstens einen Teil einer Kopf-Dichteinrichtung (56) zum Abdichten einer Verbindung zu dem Anschlusskopf (12) aufweist.

9. Anschlussadapter nach einem der vorigen Ansprüche, **dadurch gekennzeichnet, dass** wenigstens an einem Schraubenloch (50) wenigstens ein Teil einer Schraubenloch-Dichteinrichtung (72, 74) angeordnet ist.

10. Anschlussadapter nach einem der vorigen Ansprüche, **dadurch gekennzeichnet, dass** der Anschlussadapter (14) mit dem Verbindungsabschnitt (42) und dem Schraubstutzenabschnitt (44) einteilig ausgestaltet ist.

11. Vorrichtung umfassend einen Anschlusskopf (12) einer Behandlungsvorrichtung (10) für insbesondere flüssige Fluide und wenigstens einem Anschlussadapter (14) nach einem der vorhergehenden Ansprüche, wobei der Verbindungsabschnitt (42) des wenigstens einen Anschlussadapters (14) mit dem Anschlusskopf (12) verbunden ist und wobei der Anschlusskopf (12) einen fluidführenden Raum (20) aufweist und der Fluiddurchlasskanal des Schraubstutzenabschnitts (44) ausgebildet ist zur Verbindung eines fluidführenden Raumes der Behandlungseinrichtung (16) mit dem fluidführenden Raum (20) des Anschlusskopfs (12).

12. Behandlungsvorrichtung (10) umfassend wenigstens eine Vorrichtung nach Anspruch 11 und wenigstens eine Behandlungseinrichtung (16), wobei mit dem wenigstens einen Anschlussadapter (14) die Behandlungseinrichtung (16) an den wenigstens einen Anschlusskopf (12) angeschlossen ist, wobei der wenigstens eine Fluiddurchlasskanal des Schraubstutzenabschnitts (44) einen fluidführenden Raumes der wenigstens einen Behandlungseinrichtung (16) mit dem fluidführenden Raum (20) des Anschlusskopfs (12) verbindet und wobei die Behandlungseinrichtung einen Wechselfilter (16) aufweist.

## Claims

1. Connection adapter (14) for connecting a treatment device (16) to a connecting head (12) of a treatment apparatus (10) for in particular liquid fluids, in particular of an internal combustion engine, in particular of a motor vehicle, wherein the connection adapter (14) features a connecting section (42) for connection to the connecting head (12) and a screw neck section (44) coaxial in relation to an imaginary connecting axis (18) for screwing on the treatment device (16), wherein the screw neck section (44) comprises at least one fluid passage duct for connecting a fluid-guiding space of the treatment device (16) to a fluid-guiding space (20) of the connecting head (12), wherein the at least one connecting section (42) features at least two screw holes (50) for screws (70) or threaded bolts or a central thread (480) for connection to a connecting head-side central thread, **characterized in that** the treatment device features a spin-on filter (16) and the connection adapter (14) features a sealing collar (76) facing the spin-on filter (16) to be connected for abutment of an external annular seal (40) of the spin-on filter (16) to be connected, which sealing collar is preferably disposed at a free edge of the peripheral wall (46), wherein the sealing collar (76) is disposed radially outside the connecting section (42).

2. Connection adapter according to claim 1, **characterized in that** the screw holes (50) are disposed with respect to the connecting axis (18) radially outside the screw neck section (44) or an axial projection of the screw neck section (44).

3. Connection adapter according to claim 1 or 2, **characterized in that** the connection adapter (14) features at least one part (64, 66) of at least one radially outwardly disposed fluid duct which is located radially outside the screw neck section (44) or of an axial projection of the screw neck section (44) and which serves to connect a further fluid-guiding space of the treatment device (16) to a further fluid-guiding space (26) of the connecting head (12).

4. Connection adapter according to one of the preceding claims, **characterized in that** the connecting section (42) features at least one cylinder section (54, 60) coaxial in relation to the connecting axis (18) for receiving a connecting piece (22) of the connecting head (12) coaxial in relation to the connecting axis (18).

5. Connection adapter according to one of the preceding claims, **characterized in that** the connection adapter (14) features a peripheral wall (46) circumferentially surrounding at least one fluid-guiding annular space (66) of the connection adapter (14) with respect to the connecting axis (18).

6. Connection adapter according to one of the preceding claims, **characterized in that** the sealing collar (76) is disposed radially outside the at least two screw holes (50) or the central thread (480).

7. Connection adapter according to claim 5 or 6, **characterized in that** at least one screw hole (50) is disposed radially inside the peripheral wall (46) or an axial projection of the peripheral wall (46) with respect to the connecting axis (18) and/or at least one screw hole (50) is disposed radially outside the peripheral wall (46) or an axial projection of the circumferential wall (46) with respect to the connecting axis (18).

8. Connection adapter according to one of the preceding claims, **characterized in that** the connection adapter (14) features at least one part of an element sealing device (68) for sealing a connection to the treatment device (16) and/or at least one part of a head sealing device (56) for sealing a connection to the connecting head (12).

9. Connection adapter according to one of the preceding claims, **characterized in that** at least one part of a screw hole sealing device (72, 74) is disposed on at least one screw hole (50).

10. Connection adapter according to one of the preceding claims, **characterized in that** the connection adapter (14) is formed in one piece with the connecting section (42) and the screw neck section (44).

11. Apparatus comprising a connecting head (12) of a treatment apparatus (10) for, in particular, liquid fluids and at least one connection adapter (14) according to one of the preceding claims, wherein the connecting section (42) of the at least one connection adapter (14) is connected to the connecting head (12), and wherein the connecting head (12) features a fluid-guiding space (20) and the fluid passage duct of the screw neck section (44) is designed for connecting a fluid-guiding space of the treatment device (16) to the fluid-guiding space (20) of the connecting head (12).

12. Treatment apparatus (10) comprising at least one apparatus according to claim 11 and at least one treatment device (16), wherein the at least one connection adapter (14) is used to connect the treatment device (16) to the at least one connecting head (12), wherein the at least one fluid passage duct of the screw neck section (44) connects a fluid-guiding space of the at least one treatment device (16) to the fluid-guiding space (20) of the connecting head (12) and wherein the treatment device features a spin-on filter (16).

## Revendications

1. Adaptateur de raccordement (14) destiné à raccorder un dispositif de traitement (16) à une tête de raccordement (12) d'une installation de traitement (10) pour des fluides notamment liquides, notamment d'un moteur à combustion interne, notamment d'un véhicule automobile, l'adaptateur de raccordement (14) présentant une section de raccordement (42) destinée à être raccordée à la tête de raccordement (12) et une section de tubulure filetée (44) coaxiale par rapport à un axe de jonction imaginaire (18) pour le vissage du dispositif de traitement (16), la section de tubulure filetée (44) comprenant au moins un canal de passage de fluide pour relier un espace de guidage de fluide du dispositif de traitement (16) à un espace de guidage de fluide (20) de la tête de raccordement (12), la section de raccordement (42), au moins au nombre d'une, présentant au moins deux trous de vis (50) pour des vis (70) ou des boulons filetés ou un filetage central (480) pour le raccordement à un filetage central du côté de la tête de raccordement, **caractérisé en ce que** le dispositif de traitement présente un filtre interchangeable (16) et l'adaptateur de raccordement (14) présente une collerette d'étanchéité (76) tournée vers le filtre interchangeable (16) à raccorder pour l'application d'un joint annulaire extérieur (40) du filtre interchangeable (16) à raccorder, qui est disposé de préférence sur un bord libre de la paroi circonférentielle (46), la collerette d'étanchéité (76) étant disposée radialement à l'extérieur de la section de raccordement (42).

2. Adaptateur de raccordement selon la revendication 1, **caractérisé en ce que** les trous de vis (50) sont disposés radialement à l'extérieur de la section de tubulure filetée (44) ou d'une projection axiale de la section de tubulure filetée (44) par rapport à l'axe de jonction (18).

3. Adaptateur de raccordement selon la revendication 1 ou 2, **caractérisé en ce que** l'adaptateur de raccordement (14) présente au moins une partie (64, 66) d'au moins une conduite de fluide située radialement à l'extérieur, qui se trouve radialement à l'extérieur de la section de tubulure filetée (44) ou d'une projection axiale de la section de tubulure filetée (44) et qui sert à relier un autre espace de guidage de fluide du dispositif de traitement (16) à un autre espace de guidage de fluide (26) de la tête de raccordement (12).

4. Adaptateur de raccordement selon l'une quelconque des revendications précédentes, **caractérisé en ce que** la section de raccordement (42) présente au moins une section cylindrique (54, 60) coaxiale par rapport à l'axe de jonction (18) pour recevoir une tubulure de raccord (22) de la tête de raccordement (12) coaxial par rapport à l'axe de jonction (18).

5. Adaptateur de raccordement selon l'une quelconque des revendications précédentes, **caractérisé en ce que** l'adaptateur de raccordement (14) présente une paroi circonférentielle(46) qui entoure en sens circonférentiel au moins un espace annulaire (66) conduisant le fluide de l'adaptateur de raccordement (14) par rapport à l'axe de jonction (18).

6. Adaptateur de raccordement selon l'une quelconque des revendications précédentes, **caractérisé en ce que** la collerette d'étanchéité (76) est disposée radialement à l'extérieur des trous de vis (50), au moins au nombre de deux, ou du filetage central (480).

7. Adaptateur de raccordement selon la revendication 5 ou 6, **caractérisé en ce qu'**au moins un trou de vis (50) est disposé par rapport à l'axe de jonction (18) radialement à l'intérieur de la paroi circonférentielle (46) ou d'une projection axiale de la paroi circonférentielle (46) et/ou au moins un trou de vis (50) est disposé par rapport à l'axe de jonction (18) radialement à l'extérieur de la paroi circonférentielle (46) ou d'une projection axiale de la paroi circonférentielle (46).

8. Adaptateur de raccordement selon l'une quelconque des revendications précédentes, **caractérisé en ce que** l'adaptateur de raccordement (14) présente au moins une partie d'un dispositif d'étanchéité d'élément (68) destiné à rendre étanche un raccordement avec le dispositif de traitement (16) et/ou au moins une partie d'un dispositif d'étanchéité de tête (56) pour rendre étanche un raccordement avec la tête de raccordement (12).

9. Adaptateur de raccordement selon l'une quelconque des revendications précédentes, **caractérisé en ce qu'**au moins une partie d'un dispositif d'étanchéité de trou de vis (72, 74) est disposée sur au moins un trou de vis (50).

10. Adaptateur de raccordement selon l'une quelconque des revendications précédentes, **caractérisé en ce que** l'adaptateur de raccordement (14) est conçu d'un seul tenant avec la section de raccordement (42) et la section de tubulure filetée (44).

11. Installation comprenant une tête de raccordement (12) d'une installation de traitement (10), notamment de fluides liquides, et au moins un adaptateur de raccordement (14) selon l'une quelconque des revendications précédentes, la section de raccordement (42) de l'adaptateur de raccordement (14), au moins au nombre d'un, étant raccordée à la tête de raccordement (12), et la tête de raccordement (12) présentant un espace de guidage de fluide (20) et le canal de passage de fluide de la section de tubulure filetée (44) étant conçu pour relier un espace de guidage de fluide du dispositif de traitement (16) à l'espace de guidage de fluide (20) de la tête de raccordement (12).

12. Installation de traitement (10) comprenant au moins une installation selon la revendication 11 et au moins un dispositif de traitement (16), le dispositif de traitement (16) étant raccordé à la tête de raccordement (12), au moins au nombre d'une, au moyen de l'adaptateur de raccordement (14), au moins au nombre d'un, le canal de passage de fluide, au moins au nombre d'un, de la section de tubulure filetée (44) relie un espace de guidage de fluide du dispositif de traitement (16), au moins au nombre d'un, à l'espace de guidage de fluide (20) de la tête de raccordement (12), et le dispositif de traitement présentant un filtre interchangeable (16).
